# EUROPÄISCHE PATENTANMELDUNG

(11) **EP 0 859 528 A2**
(43) Veröffentlichungstag der Anmeldung: **19.08.1998**
(21) Anmeldenummer: 98102369.0
(22) Anmeldetag: 11.02.1998
(51) Int. Cl.: H04Q 7/08, H04Q 7/38, H04Q 7/30

(54) **Funkrufsystem für mobile Empfänger**

(30) Priorität: 15.02.1997 DE 19705817
(71) Anmelder: Rohde & Schwarz GmbH & Co. KG, D-81671 München (DE)
(72) Erfinder: Bott, Rainer, Dipl.-Ing., 82346 Andechs (DE)
(74) Vertreter: Graf, Walter, Dipl.-Ing.

(57) **Zusammenfassung**

Bei einem Funkrufsystem für mobile Empfänger mit einer Übertragungsstrecke von geringer Kapazität zwischen Zentrale und Basisstationen wird zum wiederholten Aussenden einer Nachricht diese von der Zentrale zur Basisstation nur einmal übertragen und in der Basisstation zwischengespeichert; getrennt davon werden von der Zentrale zur Basisstation die Sendeanweisungen übertragen und in Abhängigkeit davon die Nachricht von der Basisstation mehrfach wiederholt gesendet.

## Beschreibung

Die Erfindung betrifft ein Funkrufsystem für mobile Empfänger laut Oberbegriff des Patentanspruches.

Bei den bisher bekannten Funkrufsystemen dieser Art werden die auszusendenden Informationen vollständig in der Netzzentrale aufbereitet, die den einzelnen in der Regel im Gleichwellenbetrieb arbeitenden Funkzellen zugeordneten Basisstationen erhalten alle Daten jeweils in dem Format, in dem sie diese Daten, wie Funkrufe und dergleichen, zu den mobilen Empfängern aussenden.

Bei modernen Funkrufstandards wie ERMES ist ein wiederholtes Aussenden derselben Funknachricht möglich, so daß eine erhöhte Wahrscheinlichkeit gegeben ist, daß der mobile Empfänger diese Nachricht auch tatsächlich empfängt. Ohne eine mehrfache Aussendung besteht die Gefahr, daß der Empfänger im Moment der Aussendung sich gerade in einem Funkloch befindet, beispielsweise in einer Tiefgarage oder in einem Tunnel, und ihn somit diese nur einmal ausgesendete Nachricht nicht erreicht.

Solche Funkrufstandards mit wiederholter Nachrichtenaussendung werden bisher bei Funkrufsystemen der eingangs erwähnten Art, bei denen zwischen Zentrale und Basistationen eine Übertragungsstrecke von nur geringer Übertragungskapazität vorgesehen ist, beispielsweise eine schmalbandige Satellitenverbindung oder eine Richtfunkstrecke, nicht eingesetzt, da in diesem Fall die wiederholt und mehrfach auszusendende Nachricht auch entsprechend mehrfach von der Zentrale über die schmalbandige Übertragungsstrecke zu den Basisstationen übertragen werden müßte, hierfür aber die Übertragungskapazität dieser Übertragungsstrecke nicht ausreicht.

Es ist daher Aufgabe der Erfindung, ein Funkrufsystem für mobile Empfänger aufzuzeigen, bei dem trotz zwischengeschalteter Übertragungsstrecke von geringer Kapazität eine solche wiederholte Aussendung einer Funknachricht möglich ist.

Diese Aufgabe wird ausgehend von einem Funkrufsystem laut Oberbegriff des Patentanspruchs durch dessen kennzeichnende Merkmale gelöst.

Beim erfindungsgemäßen Funkrufsystem wird nicht mehr die Funknachricht nacheinander mehrfach über die Übertragungsstrecke zur Basisstation übertragen, sondern nur einmal die eigentliche Funknachricht und zwar zusammen mit einer gesonderten Sendeanweisung, die in einem eigenen Telegramm von der Zentrale an die Basistation übertragen wird. Die nur einmal übertragene eigentliche Funknachricht wird in den Basisstationen bis zur Aussendung zwischengespeichert und die Aussendung wird durch die Sendeanweisung gesteuert. Damit müssen wesentlich weniger Daten über die Übertragungsstrecke übertragen werden, so daß deren Übertragungskapazität entweder geringer sein kann bzw. bei konstanter Übertragungskapazität mehr Funkrufe pro Zeiteinheit übertragen und damit ausgesendet werden können. Dieser Spareffekt wird zusätzlich noch dadurch unterstützt, daß die zusammen mit der Funknachricht übertragene Sendeanweisung im allgemeinen wesentlich kürzere Telegramme benötigt als die eigentliche Funknachricht.

Die Erfindung wird im folgenden anhand einer schematischen Zeichnung an einem Ausführungsbeispiel näher erläutert.

Die Fig. zeigt das Prinzipschaltbild eines Paging- oder Funkrufnetzes bestehend aus einer Netzzentrale 1 mit Zugangssystemen zu Bearbeitung von Kundenwünschen und Rufdaten sowie aus einer Vielzahl von einzelnen in der Regel im Gleichwellenbetrieb arbeitenden Funkzellen 2, die in größeren sogenannten Paging Areas 3 zusammengefaßt sind. Die Funkzellen werden von einer Basisstation 4 bedient, die ihrerseits die auszusendenden Funkrufnachrichten von der Zentrale 1 erhält und zwar über eine Satellitenübertragungsstrecke 5 mit einem geostationären Satelliten.

Um von einer der verschiedenen Basisstationen 4 einer Paging Area 3 eine Nachricht mehrfach hintereinander an einen Empfänger 6 auszusenden wird von der Zentrale 1 an die Basisstationen 4 die eigentliche Funknachricht über die Satellitenübertragungsstrecke 5 übertragen, die Funknachricht wird nur einmal übertragen und zwar zusammen mit einem gesonderten Sendeanweisungstelegramm. Die Nachricht erhält eine eindeutige Kennung, so daß sie für die Sendeanweisung eindeutig referenziert werden kann. Die einmal übertragene Nachricht wird in den Basisstationen 4 in einem Speicher zwischengespeichert und in Abhängigkeit von der gesondert übertragenen Senderanweisung dann mehrfach wiederholt über den Sender der Basisstation 4 zu den Empfängern 6 übertragen. Damit kann auch bei einem solchen Funkrufnetz eine wiederholte Nachrichtenaussendung beispielsweise ähnlich wie beim Funkrufstandard ERMES bzw. FLEX durchgeführt werden.

Wenn beispielsweise eine Nachricht mit 200 Bytes 3-fach an einen Empfänger gesendet werden soll, so müßten beim bekannten System insgesamt 600 Bytes übertragen werden. Beim erfindungsgemäßen System muß die eigentliche Nachricht nur einmal übertragen werden und zusätzlich werden nur die drei Anweisungen zum Sender jeweils zu den vorgegebenen Zeiten wiederholt mehrfach übertragen. Eine Sendeanweisung umfaßt beispielsweise nur 4 Bytes, so daß beim erfindungsgemäßen Konzept insgesamt ca. 400 Bytes weniger über die Satellitenstrecke übertragen werden müssen.

Den einzelnen Basisstationen muß nur zusätzlich noch mitgeteilt werden, ab wann die Rufe nicht mehr zur Aussendung kommen und somit die Nachricht gelöscht werden können.

Die Formate der Funknachrichten sowie der Sendeanweisungen sind unabhängig vom angewendeten Funkrufverfahren, das beispielsweise nach dem Standard ERMES, beschrieben in European Telecommunications Standards Institute ETS 300 133 oder POCSAG, beschrieben in ANT Nachrichtentechnische Berichte, Heft 6, Oktober 1989, arbeitet. Dadurch können an die Basisstationen von verschiedenen Funkrufnetzen dieselben Nachrichten gesendet werden, so daß hierdurch eine weitere Reduzierung des Verkehrsaufkommens auf der Satellitenübertragungsstrecke möglich ist. Die Aussendung derselben Nachricht in verschiedenen Funkrufnetzen ist in gemischten Systemen, bei denen ein Dienst, z.B. Infotainment, für verschiedene Funkrufverfahren (ERMES oder POCSAG) angeboten wird, besonderes vorteilhaft einzusetzen.

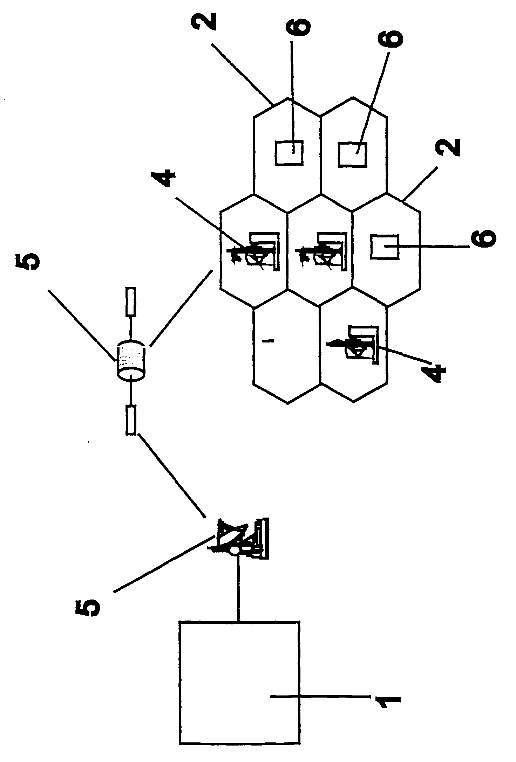

## Patentansprüche

1. Funkrufsystem für mobile Empfänger (6) mit einer Zentrale (1), mehreren Funkzellen (2) mit jeweils einer zugehörigen Basisstation (4) und einer Übertragungsstrecke (5) von geringer Kapazität zwischen Zentrale und Basisstationen, dadurch **gekennzeichnet,** daß zum wiederholten Aussenden einer Nachricht zu einem Empfänger (6) diese Nachricht von der Zentrale zur Basisstation (4) nur einmal übertragen und in der Basisstation zwischengespeichert wird, wobei getrennt davon von der Zentrale zur Basisstation die Sendeanweisungen übertragen werden und in Abhängigkeit davon die Nachricht von der Basisstation mehrfach wiederholt gesendet wird.
